# EUROPÄISCHE PATENTSCHRIFT

(11) **EP 3 123 821 B1**
(45) Veröffentlichungstag und Bekanntmachung des Hinweises auf die Patenterteilung: **05.12.2018**
(21) Anmeldenummer: 15705537.7
(22) Anmeldetag: 06.02.2015
(51) Int. Cl.: H05B 33/08

(54) **SPANNUNGSVERSORGUNGSSCHALTUNG ZUM BETRIEB VON LEDS**
VOLTAGE SUPPLY CIRCUIT FOR OPERATING LEDS
CIRCUIT D'ALIMENTATION EN TENSION POUR FAIRE FONCTIONNER DES LED

(30) Priorität: 28.03.2014 DE 102014205853
(43) Veröffentlichungstag der Anmeldung: 01.02.2017
(73) Patentinhaber: Tridonic GmbH & Co. KG, 6851 Dornbirn (AT)
(72) Erfinder: MITTERBACHER, Andre, 6850 Dornbirn (AT)
(74) Vertreter: Rupp, Christian
(86) Internationale Anmeldenummer: PCT/EP2015/052472
(87) Internationale Veröffentlichungsnummer: WO 2015/144351

(56) Entgegenhaltungen:
- WO-A2-2012/085836
- US-A1- 2010 148 673
- US-A1- 2013 264 961

## Beschreibung

Die Erfindung betrifft eine Schaltung zum Betrieb eines Leuchtmittels, insbesondere eine Spannungsversorgungsschaltung zum Betrieb von LEDs. Zusätzlich betrifft die Erfindung auch ein Verfahren zur Übermittlung von Informationen in einer derartigen Schaltung.

Die Druckschrift US 2013/264961 A1 offenbart ein Übermitteln und Empfangen von digitalen und analogen Signalen über einen Isolator hinweg.

Zum Betrieb eines LED-Moduls ist die Verwendung einer Spannungsversorgungsschaltung aufweisend einen isolierten Konverter, wie z.B. einen Flyback-Konverter, grundsätzlich bereits bekannt. Die Erfindung bezieht sich auf die Verwendung einer derartigen isolierten getakteten Spannungsversorgung (engl. switched mode power supply, SMPS) für eine LED-Strecke, die primärseitig einen Schalter aufweist, wobei dann über ein Trennelement auf die galvanisch getrennte Sekundärseite die Leistung übertragen wird, und an sekundärseitigen Klemmen die LED-Strecke angeschlossen wird.

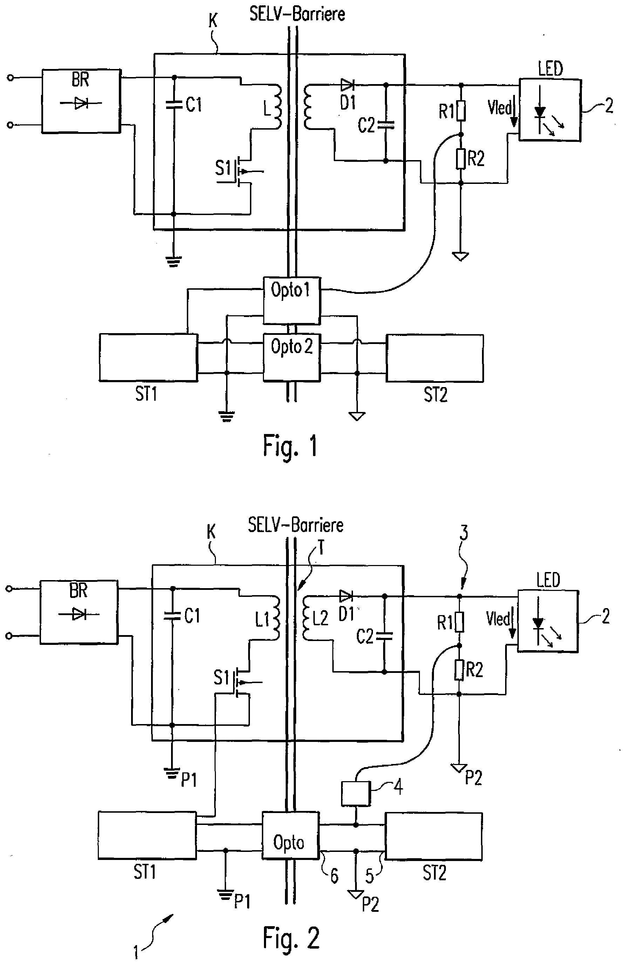

Eine derartige aus dem Stand der Technik bekannte Spannungsversorgungsschaltung ist z.B. in Fig. 1 gezeigt. Eine Netzspannung wird einem Gleichrichter z.B. in Form eines Brückengleichrichters BR zugeführt, der wiederum den als Flyback-Konverter ausgestalteten isolierten Konverter K speist. Der isolierte Konverter K umfasst eine SELV-Barriere (engl. safety extra low voltage) bzw. Sicherheitskleinspannungs-Barriere zur galvanischen Trennung zwischen einer Primärseite und einer mit einem LED-Modul 2 gekoppelten Sekundärseite.

Primär- und sekundärseitig sind jeweils eine erste Steuerschaltung ST1 und eine zweite Steuerschaltung ST2 vorgesehen. Ziel ist es, sekundärseitig eine Überspannung am LED-Modul bzw. am Ausgang des Konverters K schnell zu erfassen und darauf z.B. mit einer Reduktion der Versorgung für das LED-Modul zu reagieren. Somit muss eine Überspannungsinformation, beispielsweise erfasst über einen Spannungsteiler R1, R2, schnell von der Sekundärseite über die galvanische Trennung zu der primärseitigen Steuerschaltung ST1 übertragen werden, so dass beispielsweise abhängig von dieser Überspannungsinformation die Taktung des primärseitigen Schalters S1 verändert, insbesondere abgeschaltet wird.

Aus dem Stand der Technik ist es bekannt, dass eine speziell für die Übertragung dieses Überspannungssignals vorgesehene analoge Übertragung mittels eines dezidierten Optokopplers Opto1 zu der primärseitigen Steuerschaltung ST1 erfolgt.

Weiterhin ist es aus dem Stand der Technik bekannt, dass die Spannungsversorgungsschaltung einen weiteren Optokoppler Opto2 aufweist, der zur Übermittlung von digitalen Daten von der Sekundär- zur Primärseite ausgestaltet ist. Die sekundärseitig angeordnete zweite Steuerschaltung ST2 erfasst demnach beispielsweise eine Temperaturinformation im Bereich der LED-Strecke und überträgt diese Information über ein digitales Protokoll mittels des Optokopplers Opto2 zu der primärseitigen Steuerschaltung.

Die vorliegende Erfindung hat indessen erkannt, dass diese bekannte Ausgestaltung der Spannungsversorgungsschaltung wegen der Benutzung von zwei unterschiedlichen Optokopplern nachteilig ist.

Der vorliegenden Erfindung liegt nunmehr die Aufgabe zugrunde, eine vereinfachte Schaltung insbesondere zum Betrieb von LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Gemäß der Erfindung ist nunmehr vorgesehen, dass die Überspannungsinformation von der Sekundärseite dem digitalen Protokoll überlagert wird, und somit ein einziger Optokoppler verwendet wird, um diese Information sowie die weiteren beispielsweise Messdaten von der sekundärseitigen Steuerschaltung zu der primärseitigen Steuerschaltung zu übertragen.

Ein erster Aspekt der Erfindung bezieht sich auf eine getaktete, galvanisch-getrennte Spannungsversorgungschaltung zum Betrieb eines LED-Moduls. Die Spannungsversorgungschaltung weist auf ein galvanisches Trennelement, an dessen Primärseite ein durch eine erste Steuerschaltung getakteter Schalter vorgesehen ist, und dessen Sekundärseite zu Anschlüssen für das LED-Modul geführt ist. Eine potentialmässig auf der Sekundärseite des galvanischen Trennelements angeordnete zweite Steuerschaltung ist vorgesehen. Diese zweite Steuerschaltung ist dazu ausgelegt, zumindest unidirektional mit der ersten Steuerschaltung mittels eines digitalen Protokolls über einen vorzugsweise potentialgetrennten Signalübertrager, bspw. einen Optokoppler zu kommunizieren, um Betriebsparameter des LED-Moduls zu der ersten Steuerschaltung zu übermitteln. Auf der Sekundärseite ist eine Schaltung zur Erfassung eines Überspannungszustands vorgesehen. Ein Ausgangssignal der Erfassungsschaltung wird ebenfalls über den Signalübertrager übertragen, der auch für die Übermittlung der Betriebsparameter verwendet ist. Das Ausgangssignal der Erfassungsschaltung ist unter Umgehung der zweiten Steuerschaltung dem Signalübertrager zugeführt.

Vorteilhafterweise wird somit in der erfindungsgemäßen Spannungsversorgungsschaltung der aus dem Stand der Technik bekannte Signalübertrager zur Übertragung des Überspannungszustands eingespart. Erfindungsgemäß wird in der Tat das Überspannungssignal mittels des bereits vorhandenen und zur digitalen Übermittlung von Betriebsparametern des LED-Moduls vorgesehenen Signalübertragers zu der primärseitigen Steuerschaltung übertragen.

Vorteilhafterweise kann also erfindungsgemäß ein Rückführsignal, das vorzugsweise schnell übertragen werden soll, von der Sekundärseite zur Primärseite übermittelt werden, ohne dabei einen zusätzlichen Signalübertrager zu verwenden.

Das Ausgangssignal der Erfassungsschaltung kann der Übermittlung der Betriebsparameter zwischen einem Aushang der zweiten Steuerschaltung und dem sekundärseitigen Anschluss des Signalübertragers überlagert sein.

Für den Fall, dass das Ausgangssignal der Erfassungsschaltung einen Überspannungszustand anzeigt, kann dieses Signal eine höhere Priorität als die Übermittlung der Betriebsparameter haben, insbesondere derart, dass während des Anliegens des Ausgangssignals der Erfassungsschaltung, das einen Überspannungszustand anzeigt, keine Betriebsparameter übermittelt werden können.

Die Erfassungsschaltung kann einen Überspannungszustand als Ausgangssignal dadurch wiedergeben, dass das Ausgangssignal das über den Signalübertrager übertragene Signal während einer Zeitdauer in einen Zustand verbringt, der von dem digitalen Protokoll abweicht.

Die Erfassungsschaltung kann einen Überspannungszustand als Ausgangssignal dadurch wiedergeben, dass das Ausgangssignal das über den Signalübertrager übertragene Signal während einer Zeitdauer in einen Zustand verbringt, der länger ist als die maximal zulässige Zeitdauer eines logischen Zustands des digitalen Protokolls.

Die erste Steuerschaltung kann einen sekundärseitigen Überspannungszustand erkennen, wenn das der ersten Steuerschaltung über den Signalübertrager zugeführte Signal in einer vorgegebenen Weise von dem digitalen Protokoll abweicht. Als Antwort darauf kann die erste Steuerschaltung Maßnahmen zur Verringerung oder Beseitigung des Überspannungszustands ergreifen, bspw. durch Veränderung der Taktung des Schalters.

Ein weiterer Aspekt der Erfindung bezieht sich auf eine LED-Lampe, aufweisend eine derartige Spannungsversorgung sowie wenigstens ein angeschlossenes LED-Modul.

Ein weiterer Aspekt der Erfindung bezieht sich auf ein Verfahren zur Übermittlung von Information in einer getakteten, galvanisch-getrennten Spannungsversorgungschaltung zum Betrieb eines LED-Moduls, aufweisend ein galvanisches Trennelement, an dessen Primärseite ein durch eine erste Steuerschaltung getakteter Schalter vorgesehen ist, und dessen Sekundärseite zu Anschlüssen für das LED-Modul geführt ist. Eine potentialmässig auf der Sekundärseite des galvanischen Trennelements angeordnete zweite Steuerschaltung kommuniziert zumindest unidirektional mit der ersten Steuerschaltung mittels eines digitalen Protokolls über einen vorzugsweise potentialgetrennten Signalübertrager, bspw. einen Optokoppler, und übermittelt über diese Kommunikation Betriebsparameter des LED-Moduls zu der ersten Steuerschaltung. Auf der Sekundärseite erfasst eine Erfassungsschaltung einen Überspannungszustand. Ein Ausgangssignal der Erfassungsschaltung wird unter Umgehung der zweiten Steuerschaltung ebenfalls über den Signalübertrager übertragen, der auch für die Übermittlung der Betriebsparameter verwendet wird.

Das Ausgangssignal der Erfassungsschaltung kann der Übermittlung der Betriebsparameter zwischen einem Aushang der zweiten Steuerschaltung und dem sekundärseitigen Anschluss des Signalübertragers überlagert werden.

Für den Fall, dass das Ausgangssignal der Erfassungsschaltung einen Überspannungszustand anzeigt, kann das Ausgangssignal der Erfassungsschaltung eine höhere Priorität als die Übermittlung der Betriebsparameter haben, insbesondere derart, dass während des Anliegens des Ausgangssignals der Erfassungsschaltung, das einen Überspannungszustand anzeigt, keine Betriebsparameter übermittelt werden.

Die Erfassungsschaltung kann einen Überspannungszustand als Ausgangssignal dadurch wiedergeben, dass das Ausgangssignal das über den Signalübertrager übertragene Signal während einer Zeitdauer in einen Zustand verbringt, der von dem digitalen Protokoll abweicht.

Die Erfassungsschaltung kann einen Überspannungszustand als Ausgangssignal dadurch wiedergeben, dass das Ausgangssignal das über den Signalübertrager übertragene Signal während einer Zeitdauer in einen Zustand verbringt, der länger ist als die maximal zulässige Zeitdauer eines logischen Zustands des digitalen Protokolls.

Die erste Steuerschaltung kann einen sekundärseitigen Überspannungszustand erkennen, wenn das der ersten Steuerschaltung über den Signalübertrager zugeführte Signal in einer vorgegeben Weise von dem digitalen Protokoll abweicht. Als Antwort darauf kann insbesondere die erste Steuerschaltung Maßnahmen zur Verringerung oder Beseitigung des Überspannungszustands ergreifen, bspw. durch Veränderung der Taktung des Schalters.

Die Beschreibung der Erfindung erfolgt nun auch mit Bezug auf die beigefügten Zeichnungen. Dabei zeigen:
Fig. 1 schematisch eine aus dem Stand der Technik bekannte Spannungsversorgungsschaltung für Leuchtmittel,
Fig. 2 schematisch das Schaltbild eines Ausführungsbeispiels einer erfindungsgemäßen Spannungsversorgungsschaltung für Leuchtmittel wie z.B. LEDs,
Fig. 3 das mittels des Signalübertragers der erfindungsgemäßen Spannungsversorgungsschaltung übertragene Signal,
Fig. 4 eine besondere Ausführungsform der erfindungsgemäßen Spannungsversorgungsschaltung, und
Fig. 5 den Verlauf von elektrischen Größen der Spannungsversorgungsschaltung.

Fig. 2 zeigt schematisch das Schaltbild eines Ausführungsbeispiels einer erfindungsgemäßen Spannungsversorgungsschaltung für Leuchtmittel.

Die in Fig. 2 dargestellte und allgemein mit dem Bezugszeichen 1 versehene erfindungsgemäße Spannungsversorgungsschaltung ist im dargestellten Ausführungsbeispiel zum Betreiben von Leuchtmitteln, insbesondere zum Betreiben eines LED-Moduls 2, vorgesehen. Die Spannungsversorgungsschaltung 1 basiert grundsätzlich auf der in Fig. 1 gezeigten Schaltung des Stands der Technik.

Die Spannungsversorgungsschaltung 1 ist eingangsseitig über zwei Eingangsklemmen K1, K2 an ein Stromversorgungsnetz anschließbar, welches eine Netzversorgungsspannung Vmains zur Verfügung stellt. Die Netzversorgungsspannung Vmains stellt hier ein Beispiel für eine Wechselspannung zum Speisen der Spannungsversorgungsschaltung 1 dar.

Die Spannungsversorgungsschaltung 1 weist vorzugsweise einen Gleichrichter BR, einen Konverter K, eine Erfassungsschaltung 3 und zwei Steuerschaltungen ST1, ST2 auf.

Der Gleichrichter BR führt eine Gleichrichtung der Netzversorgungsspannung Vmains durch. Beispielsweise kann der Gleichrichter in Form eines Vollbrückengleichrichters mit vier Dioden zur Umwandlung der Wechselspannung in eine pulsierende Gleichspannung ausgestaltet sein. Die Ausgangsspannung des Gleichrichters BR wird dem Konverter K zugeführt. Diese Spannung ist vorzugsweise eine einweggleichgerichtete Wechselspannung.

Der Konverter K umfasst eingangsseitig einen Kondensator C1 auf, an welchem die Eingangsspannung des Konverters K anliegt. Dieser Kondensator C1 dient zum Filtern der gleichgerichteten Netzversorgungsspannung.

Der Konverter K weist ein Trennelement bzw. einen Übertrager T auf. Dieses Trennelement T dient zur galvanischen Trennung zwischen einer Primärseite und einer Sekundärseite des Konverters K. Die Primärseite wird von der Netzversorgungsspannung versorgt. Über die Sekundärseite wird wiederum das LED-Modul 2 versorgt.

Diese galvanische Trennung bildet die in Fig. 2 gezeigte SELV-Barriere (engl. safety extra low voltage) bzw. Sicherheitskleinspannungs-Barriere. Die Primärseite weist einen ersten Bezugspotential P1 auf, und die Sekundärseite einen zweiten Bezugspotential P2.

Der isolierte Konverter K ist im dargestellten Ausführungsbeispiel der Fig. 2 durch einen sogenannten Flyback-Konverter gebildet, der auch als Sperrwandler oder Hoch-Tiefsetzsteller bezeichnet werden kann. Im Allgemeinen ist der Konverter K ein Spannungswandler bzw. Gleichspannungswandler und kann auch alternative Topologien aufweisen, insbesondere Topologien aufweisend eine galvanische Trennung. Der Flyback-Konverter ist im Ausführungsbeispiel der Fig. 2 also als Beispiel für einen durch mindestens einen Schalter S1 getakteten potentialgetrennten Konverter angeführt, der zur Potentialtrennung das Trennelement T aufweisen kann. Indessen kann die Spannungsversorgungsschaltung 1 stattdessen auch andere getaktete Schaltungen, insbesondere mit galvanischer Trennung aufweisen, wie z.B. einen Durchflusswandler, auch Forward-Konverter genannt, oder einen Gegentaktwandler, auch Push-Pull-Konverter genannt, wie z.B. einen Gegentaktwandler mit Halbbrücken- oder Vollbrückenansteuerung.

Der Flyback-Konverter K der Fig. 2 umfasst ein Trennelement in Form beispielsweise eines Transformators mit einer Primärwicklung L1 auf der Primärseite und einer mit der Primärwicklung gekoppelten Sekundärwicklung L2 auf der Sekundärseite. Das Trennelement T dient zur Potentialtrennung und zur Übertragung von elektrischer Energie von der Primärwicklung L1 zur Sekundärwicklung L2 bzw. von der Primärseite zu der Sekundärseite. Vorzugsweise wird die Energie in zwei unterschiedliche Phasen jeweils primärseitig aufgenommen und sekundärseitig wieder abgegeben. Ein Trennelement in Form eines Transformators weist deswegen zur Zwischenspeicherung der Energie zwischen den zwei Phasen vorzugsweise einen Luftspalt auf.

Der Konverter K umfasst einen steuerbaren Schalter S1. In bekannter Weise kann durch ein entsprechendes abwechselndes Öffnen und Schließen des Schalters S1 die von der eingangsseitig am Konverter K anliegenden Spannung zur Verfügung gestellte Energie auf die Sekundärseite des Konverters K übertragen werden. Diese auf die Sekundärseite übertragene Energie kann zum Betreiben des sekundärseitig anschließbaren LED-Moduls 2 verwendet werden. Die Energieübertragung findet dabei im geöffneten Zustand des Schalters S1 statt, wobei hierzu auf der Ausgangsseite des Flyback-Konverters K ferner eine Diode D1 vorgesehen ist.

Der Schalter S1 ist in Serie zu der Primärwicklung L1 geschaltet, so dass durch Schließen des steuerbaren Schalters S1 ein primärseitiger Strom durch diese Primärwicklung L1 fließen kann. Bei geöffnetem Schalter S1 kann hingegen kein Strom durch diese Primärwicklung L1 fließen. Der Schalter S1 ist dabei beispielsweise als steuerbarer Transistor ausgestaltet, insbesondere als FET oder MOSFET-Transistor. Der Schalter S1 wird von der ersten Steuerschaltung ST1 gesteuert. Vorzugsweise ist diese erste Steuerschaltung ST1 auf der Primärseite des Konverters K bzw. des Trennelements T angeordnet.

Die Serienschaltung bestehend aus dem Schalter S1 und der Primärwicklung L1 ist zwischen beiden Eingangsklemmen des Konverters K geschaltet. Im dargestellten Ausführungsbeispiel ist der Schalter S1 ein MOSFET-Transistor, wobei der Gate-Eingang des Schalters S1 als Steuereingang ausgestaltet ist und mit der ersten Steuerschaltung ST1 verbunden ist, so dass die erste Steuerschaltung den Schalter S1 ein- und ausgeschalten kann. Der Schalter S1 der Fig. 1 ist insbesondere als p-Kanal ausgestaltet, wobei der Drain-Anschluss mit einer Klemme der Primärwicklung L1 verbunden ist. Der Source-Anschluss des Schalters S1 ist vorzugsweise mit Masse, d.h. mit dem primärseitigen Bezugspotential P1, gekoppelt bzw. verbunden.

Die auf der Sekundärseite vorgesehene Diode D1 ist in Serie mit der Sekundärwicklung L2 geschaltet. Parallel zu der Reihenschaltung der Diode D1 und der Sekundärwicklung L2 ist ein Kondensator C2 vorgesehen. Die Spannung an diesem Kondensator C2 bildet die Ausgangsspannung des Konverters 2 und, da das LED-Modul 2 vorzugsweise am Ausgang des Kondensators K angeschlossen ist, wiederum auch die am LED-Modul 2 anliegende Spannung Vled. Das LED-Modul 2 weist eine oder mehrere LEDs, vorzugsweise eine LED-Strecke aufweisend mehrere in Serie geschaltete LEDs, auf. Das LED-Modul 2 kann auch eine Parallel-Schaltung von mehreren LED-Strecken oder eine gemischte Schaltung aus parallel und seriell geschalteten LEDs aufweisen.

Neben der ersten Steuerschaltung ST1 zur Ansteuerung des Schalters S1 ist sekundärseitig eine zweite Steuerschaltung ST2 vorgesehen, die zur Übertragung von Informationen zurück zur ersten Steuerschaltung ST1 ausgestaltet ist. Diese Informationen werden vorzugsweise in digitaler Form von der zweiten Steuerschaltung ST2 übertragen. Aufgrund der galvanischen Trennung zwischen Primär- und Sekundärseite werden diese Informationen mit Hilfe eines Signalübertragers Opto zur ersten Steuerschaltung ST1 übermittelt.

Diese vorzugsweise digital übermittelte Informationen sind z.B. Betriebsparameter des LED-Moduls 2 wie z.B. die Umgebungstemperatur des LED-Moduls 2 oder eine elektrische Größe aus dem Bereich des LED-Moduls 2. Allgemein handelt es sich dabei um einen Betriebsparameter, der sekundärseitig erfasst wird. Eine etwaige erforderliche Schaltung bzw. Sensorik zur Erfassung dieses Betriebsparameters ist in Fig. 2 nicht gezeigt.

Der Signalübertrager Opto kann z.B. ein Optokoppler sein. Der Optokoppler steht allerdings nur für eine Möglichkeit für eine galvanisch getrennte Übertragung. Auch alternative bekannte Signalübertrager mit galvanischer Trennung sind hier einsetzbar. Grundsätzlich kann mit dem Signalübertrager Opto sogar eine galvanisch nicht getrennte Übertragung erfolgen, soweit diese Übertragung innerhalb der Normen für die SELV-Barriere liegt.

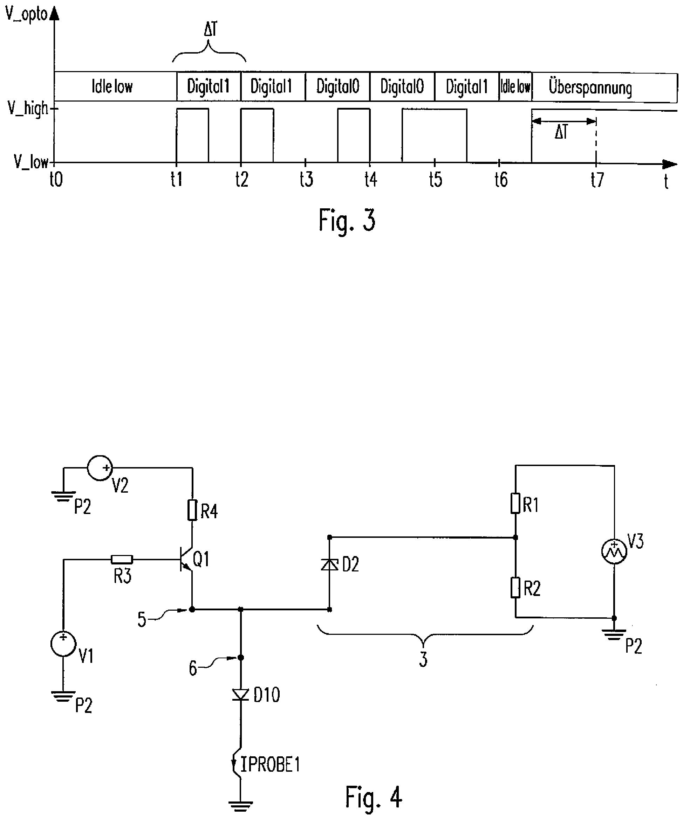

Ein Beispiel für eine digitale Datenübertragung von der zweiten Steuerschaltung ST2 zur ersten Steuerschaltung ST1 ist in Fig. 3 gezeigt. Fig. 3 zeigt nämlich das mittels des Optokopplers Opto übertragene Signal. Gezeigt ist insbesondere der zeitliche Verlauf der Spannung V_opto des Optokopplers bei einer digitalen Übertragung basierend auf dem Manchester-Code. Diese Spannung V_opto wiedergibt die durch den Optokoppler übertragenen Informationen.

Zwischen den Zeitpunkten t0 und t1 bleibt die Spannung V_opto auf Null, so dass in diesem Zeitraum grundsätzlich keine Daten übertragen werden. Dieser Zustand ist in Fig. 3 mit "idle low" gekennzeichnet. Zwischen t1 und t2 wird von der zweiten Steuerschaltung ST2 der digitale Wert 1 übertragen. Dies ist in Fig. 3 erkennbar, in dem in diesem Zeitraum die Spannung V_opto eine negative Flanke aufweist. In den folgenden Zeitdauern t2-t3, t3-t4, t4-t5, t5-t6 wird jeweils der digitale Wert 0 oder 1 gesendet, je nachdem ob die Flanke positiv oder negativ ist. Die Zeitdauer ΔT für die Übertragung eines Bits bzw. eines digitalen Werts bleibt vorzugsweise konstant. In der Ausführungsform der Fig. 3 bedeutet jeweils eine fallende oder steigende Flanke eine logische Eins oder Null. Eine alternative Definition mit einer durch eine steigende Flanke definierte logischen Eins ist ebenso möglich.

Die Spannungsversorgungsschaltung 1 umfasst somit den Signalübertrager Opto, der zur Übermittlung von digitalen Daten von der Sekundär- zur Primärseite ausgestaltet ist. Die sekundärseitig angeordnete zweite Steuerschaltung ST2 erfasst demnach einen oder mehrere Betriebsparameter im Bereich der Sekundärseite und überträgt die entsprechende Information über ein digitales Protokoll mittels des Signalübertragers Opto zu der primärseitigen Steuerschaltung ST1.

Am Ausgang des Konverters K ist die Erfassungsschaltung 3 vorgesehen. Diese Erfassungsschaltung dient zur Messung bzw. Erfassung der Ausgangsspannung der Spannungsversorgungsschaltung 1 bzw. der am LED-Modul 2 anliegenden Spannung Vled. Die Erfassungsschaltung 3 kann hierzu z.B. einen Spannungsteiler mit zwei Widerständen R1, R2 aufweisen. Vorzugsweise ist dieser Spannungsteiler in parallel zum Kondensator C2 bzw. zwischen beiden Eingangsklemmen des LED-Moduls 2 angeordnet.

Aus der erfassten Spannung Vled bildet die Erfassungsschaltung 3 weiterhin eine Information bezüglich einer Überspannung am Ausgang des Konverters K bzw. am LED-Modul 2. Das vom Spannungsteiler R1, R2 abgegriffene Signal wird demnach einer Auswerteschaltung 4 zugeführt, die das Messsignal der Spannung Vled auswertet und daraus ausgangsseitig eine Information über einen möglichen Überspannungszustand erzeugt. Vorzugsweise ist diese Überspannungsinformation eine binäre Information. Die Auswerteschaltung 4 ist vorzugsweise eine analoge Schaltung in Form z.B. einer Zener-Diode, die z.B. in der Ausführungsform der Fig. 4 verwendet wird.

Das vom Spannungsteiler R1, R2 abgegriffene Signal wird von der Auswerteschaltung 4 vorzugsweise derart ausgewertet wird, dass bei Vorliegen eines Überspannungszustands der Ausgang der Auswerteschaltung 4 auf 'high' - Spannung hoch - geht, ansonsten auf 'low' bleibt. Die bedeutet, dass am Ausgang der Auswerteschaltung 4 eine niedrige Spannung vorhanden ist, wenn kein Überspannung erkannt wurde. Dagegen wird eine höhere Spannung (,high') am Ausgang der Auswerteschaltung 4 einen Überspannungszustand wiedergeben.

Diese Überspannungsinformation wird erfindungsgemäß mittels des Signalübertragers Opto zur Primärseite übertragen. Gemäß der Erfindung ist nunmehr vorgesehen, dass die Überspannungsinformation von der Sekundärseite dem digitalen Protokoll der zweiten Steuerschaltung ST2 überlagert wird.

Das Ausgangssignal der Erfassungsschaltung 3, das die Überspannungsinformation beinhaltet, wird also ebenfalls über den Signalübertrager Opto, der auch für die Übermittlung der Betriebsparameter verwendet ist, übertragen. Das Ausgangssignal der Erfassungsschaltung 3 wird unter Umgehung der zweiten Steuerschaltung ST2 dem Signalübertrager Opto zugeführt. Vorzugsweise wird das Ausgangssignal der Erfassungsschaltung 3 zwischen dem Ausgang 5 der zweiten Steuerschaltung ST2 und dem sekundärseitigen Anschluss 6 des Signalübertragers Opto überlagert.

Bei der Erfindung geht es vorzugsweise um die Rückführung eines Signals betreffend z.B. einen Überspannungszustand, wobei dieses Rückführsignal insbesondere schnell zur Primärseite übertragen werden soll. Dies soll ermöglichen, dass auf eine Überspannung auf der Sekundärseite die erste Steuerschaltung ST1 möglichst schnell reagieren kann, in dem durch entsprechende Ansteuerung des Schalters S1 z.B. die Versorgung für das LED-Modul reduziert oder sogar abgeschaltet wird.

Vorzugsweise wird also das Ausgangssignal der Erfassungsschaltung 3 nicht der sekundärseitigen zweiten Steuerschaltung ST2 zugeführt, sondern dem Ausgang 5 der zweiten Steuerschaltung ST2 überlagert, wobei dann diese überlagerte Information dem Eingang 6 des Signalübertragers Opto zugeführt ist.

Um zu gewährleisten, dass die von der Auswerteschaltung 4 erzeugte Überspannungsinformation schnell von der Sekundärseite über die galvanische Trennung zu der primärseitigen Steuerschaltung ST1 übertragen werden kann, kann insbesondere die schnelle Übertragung der Überspannungsinformation eine höhere Priorität als die weiteren mittels des digitalen Protokolls übertragenen Betriebsparameter haben. Für den Fall, dass das Ausgangssignal der Erfassungsschaltung 3 einen Überspannungszustand anzeigt, soll also dieses Ausgangssignal eine höhere Priorität als die Übermittlung der Betriebsparameter haben. Dies wird insbesondere dadurch erreicht, dass während des Anliegens des Ausgangssignals der Erfassungsschaltung 3, das einen Überspannungszustand anzeigt, keine Betriebsparameter übermittelt werden können.

Beispielsweise kann das digitale Protokoll derart ausgestaltet sein, dass die Zeitdauer, während der ein logischer Zustand 'high' (V_opto = V_high) übertragen wird, auf eine vorbestimmte Zeitdauer begrenzt ist. Wenn nunmehr eine Überspannungsinformation übertragen werden soll, wird gezielt die Zeitdauer des logischen Zustands 'high' über diese vorbestimmte maximale Zeitdauer hinweg überschritten, was also die primärseitige erste Steuerschaltung ST1 als Überspannungsinformation interpretiert. In diesem Zustand, in dem also die Überspannung angezeigt wird, kann natürlich keine andere Information mehr über dieses digitale Protokoll übertragen werden, somit hat die Überspannungsinformation eine höhere Priorität als die weiteren zu übertragenen Daten bzw. Betriebsparameter.

Nach einer Ausführungsform der vorliegenden Erfindung benutzt die zweite Steuerschaltung ST2 als digitale Kodierung den bereits im Zusammenhang mit Fig. 3 gezeigten Manchester-Code. Die Zeitdauer ΔT wiedergibt die Dauer der Übertragung eines Bits bzw. eines digitalen Werts. Da eine logische Eins oder Null durch eine fallende oder steigende Flanke definiert ist, kann die Spannung V_opto nicht länger als für die Zeitdauer ΔT eine höhere Spannung V_high aufweisen.

Beim Vorliegen einer sekundärseitigen Überspannung erzeugt die Auswerteschaltung 4 der Erfassungsschaltung 3 nunmehr ein Auswertesignal, dass länger als diese Zeitdauer ΔT den Hochpegel 'high' aufweist. Dieser Hochpegel am Ausgang der Auswerteschaltung 4 kann insbesondere dauerhaft bestehen bleiben, oder zumindest für einen Zeitdauer, die deutlich länger dauert als die vorgegebene Hochpegel (,high') - Zustandsdauer ΔT des digitalen Protokolls. Dieser Ausgang der Auswerteschaltung 4 verbleibt im Überspannungszustand also im Vergleich zur maximalen Hochpegel-Zeitdauer des digitalen Protokolls gezielt lange auf dem Hochpegel (,high') .

In Fig. 3 wird, wie bereits gezeigt, zwischen t5 und t6 eine logische Eins über den Signalübertrager Opto übermittelt. Nach dem Zeitpunkt t6 wird indessen von der Erfassungsschaltung 3 eine Überspannung erkannt, so dass entsprechend das Ausgangssignal dieser Erfassungsschaltung 3 von einem niedrigen Spannungspegel auf einen höheren Spannungspegel (,high') steigt, und dann für eine Zeitdauer länger als ΔT auf diesem höheren Spannungspegel verbleibt.

Nach dem Zeitpunkt t6 weist die Spannung V_opto eine steigende Flanke. Die Spannung V_opto bleibt danach auf dem höheren Spannungspegel V_high für eine Zeitdauer, die länger als die Zeitdauer ΔT ist. Dieser Zustand ist im gewählten digitalen Protokoll - hier Manchester-Code - nicht möglich und wird daher von der ersten Steuerschaltung ST1 als Überspannungsinformation interpretiert. In Fig. 3 kann diese Interpretation als Überspannungsinformation frühestens zum Zeitpunkt t7 erfolgen, sobald die Spannung V_opto für eine Zeitdauer länger als ΔT auf dem Pegel V_high verbleibt.

Die erste Schaltung ist somit in der Lage, einen dauerhaften - d.h. länger als die Zeitdauer ΔT - niedrigen Pegel so zu interpretieren, dass keine Betriebsparameter übermittelt werden und kein Überspannungszustand herrscht. Ein dauerhafter - d.h. länger als die Zeitdauer ΔT - Hochpegel wird indessen als Überspannungszustand interpretiert. Die Erfindung lässt sich umgekehrt auch auf den Zustand 'low' anwenden, in dem insbesondere ein dauerhafter niedriger Pegel von der ersten Steuerschaltung ST1 als Überspannungszustand interpretiert wird.

Erfindungsgemäß kann also die Erfassungsschaltung 3 einen Überspannungszustand als Ausgangssignal dadurch wiedergeben, dass das Ausgangssignal das über den Signalübertrager Opto übertragene Signal in einen Zustand verbringt, der von dem digitalen Protokoll abweicht. Dieser Zustand verbleibt insbesondere für eine Zeitdauer, die länger ist als die maximal zulässige Zeitdauer eines logischen Zustands des digitalen Protokolls.

Die erste Steuerschaltung ST1 ist somit in der Lage, einen sekundärseitigen Überspannungszustand zu erkennen, wenn das der ersten Steuerschaltung ST1 über den Signalübertrager Opto zugeführte Signal vorzugsweise in einer vorgegeben Weise von dem digitalen Protokoll abweicht. Als Antwort darauf kann die erste Steuerschaltung ST1 Maßnahmen zur Verringerung oder Beseitigung des Überspannungszustands ergreifen, bspw. durch Veränderung der Taktung des Schalters S1.

Fig. 4 zeigt eine besondere Ausführungsform der erfindungsgemäßen Spannungsversorgungsschaltung 1 der Fig. 2.

Die in Fig. 2 gezeigte Auswerteschaltung 4 ist hier in Form einer Zener-Diode D2 ausgestaltet. Die analoge Schaltung, die das Spannungsteilersignal verarbeitet, ist in dem Ausführungsbeispiel von Fig. 4 eine Zenerdiode. Die vom Spannungsteiler R1, R2 erfasste Spannung wird der Kathode der Zener-Diode D2 zugeführt. Die Zener-Diode D2 und der Spannungsteiler R1, R2 bilden die erfindungsgemäße Erfassungsschaltung 3.

Die zweite Steuerschaltung ST2 weist z.B. einen Schalter Q1 auf, mit dem das digitale Protokoll zur Übertragung der Betriebsparameter erzeugt wird. Der Kollektor-Anschluss des Schalters Q1 ist über einen Widerstand R4 mit einer Spannung V2 von z.B. 3,3 Volt versorgt. Der Basis Anschluss ist über einen Widerstand R3 mit einer Steuerspannung V1 verbunden. Diese Steuerspannung V1 ist für die Erzeugung des digitalen Protokolls verantwortlich und bestimmt z.B. die steigenden und abfallenden Flanken des Manchester-Codes.

Der Ausgang 5 der zweiten Steuerschaltung ST2, d.h. der Emitter-Anschluss des Schalters Q1, ist mit dem sekundärseitigen Eingang 6 des Signalübertragers Opto verbunden, wobei hier der Signalübertrager als Optokoppler ausgestaltet ist. Erfindungsgemäß wird der Ausgang der Erfassungsschaltung 3 direkt dem Eingang 6 des Optokopplers aufgeschlagen.

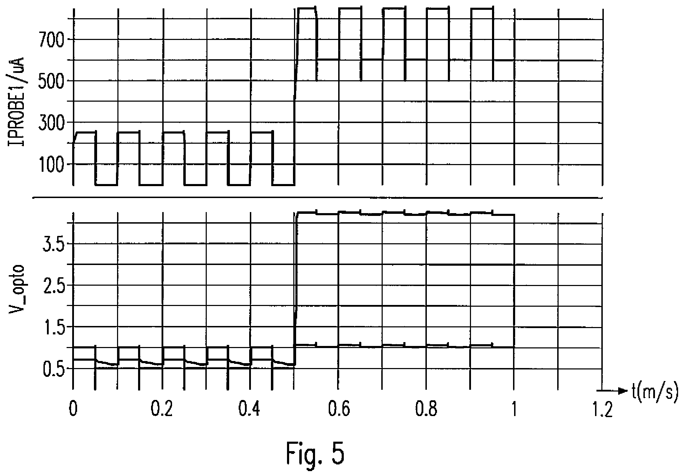

Der Optokoppler umfasst eine Sendediode D10, wobei in Fig. 5 der Verlauf des Stroms IPROBE1 durch die Sendediode D10 gezeigt ist. Zwischen t=0 und t=0,5 ms erzeugt die zweite Steuerschaltung ST2 fünf Bits entsprechend z.B. dem Manchester-Code. Der Strom IPROBE1 nimmt alternierend den Wert 0,250 mA und den Wert 0 mA an. Übermittelt wird hier z.B. fünf Mal eine logische Eins. In diesem Zeitabschnitt bleibt die Ausgangsspannung der Erfassungsschaltung 3, d.h. die Spannung an der Anode der Zener-Diode D2, auf 0 Volt.

Sobald zum Zeitpunkt t=0,5 ms ein sekundärseitiger Überspannungszustand gegeben ist, steigt die Spannung an der Zener-Diode D2, so dass auch die Eingangs-Spannung V_opto an dem Optokoppler steigt. Dies führt dazu, dass dauerhaft der Strom durch die Sendediode D10 über 0,5 mA verbleibt.

Die Zener-Diode D2 schaltet erst durch, wenn ein Überspannungszustand erreicht ist. Im Normalspannungszustand überlagert sie indessen kein Signal dem digitalen Ausgang. Nachdem die LED-Spannung Vled zu hoch gestiegen ist und folglich ein Überspannungszustand gegeben ist, ist die Sendediode D10 kontinuierlich leitend.

Der Ausgang der Erfassungsschaltung 3, der also gezielt lange im Überspannungszustand auf 'high' verbleibt, wird vorzugsweise direkt dem Eingang des Optokopplers aufgeschlagen, welcher Eingang auch für die Übertragung des digitalen Protokolls für andere Daten verwendet wird. Direkt ist hier dahingehend zu verstehen, dass der Ausgang der Erfassungsschaltung 3 eben nicht der zweiten Steuerschaltung ST2 zugeführt wird.

Es ist indessen vorteilhaft, dass gemäß der Erfindung das abgegriffene Überspannungssignal vom Spannungsteiler nicht der sekundärseitigen zweiten Steuerschaltung ST2 zugeführt wird. Vielmehr wird das Überspannungssignal in dem Bereich zwischen dem Ausgang 5 der sekundärseitigen Steuerschaltung ST2 und dem Eingang 6 des Optokopplers überlagert. Somit ist in der Tat eine schnelle Übertragung der Überspannungsinformation möglich. Würde der Ausgang der Erfassungsschaltung stattdessen der zweiten Steuerschaltung ST2 zugeführt werden, könnte die Überspannungsinformation entsprechend dem digitalen Protokoll nur langsamer übertragen werden.

Dieses erfindungsgemäße Beaufschlagen mit dem Überspannungssignal, verarbeitet vorzugsweise durch eine analoge Schaltung führt dazu, dass die primärseitige Steuerschaltung ST1 einen Zustand erkennt, beispielsweise zu langes 'high' oder 'low', der von dem für die Datenübertragung vorgesehenen Protokoll abweicht. Die Erfindung sieht also vor, dass einem Übertragungskanal für digital kodierte Übertragung von der sekundärseitigen zweiten Steuerschaltung ST2 zu der primärseitigen ersten Steuerschaltung ST1, potentialgetrennt oder nicht, das Überspannungssignal überlagert wird, und somit die erste Steuerschatlung ST1 einen Kanalzustand erkennt, der von dem Protokoll für die Übertragung der weiteren Daten abweicht.

Es kann indessen auch vorgesehen sein, dass die digitale Information, die von der sekundärseitigen Steuerschaltung ST2 ausgegeben wird, durch das Überlagern nicht verloren geht. Das kann beispielsweise dadurch erfolgen, dass während der Bit-Zeitdauer des digitalen Protokolls Impulse überlagert werden - z.B. durch eine entsprechende Auswerteschaltung für den Überspannungszustand der zu erfassenden Messgröße - und die primärseitige Steuerschaltung diese verhältnismäßig hochfrequenten Änderungen als entsprechenden sekundärseitigen Zustand - z.B. z.B. Überspannungszustand - interpretiert und abhängig davon vorzugsweise die Taktung des primärseitigen Schalters S1 bzw. die Spannungsversorgung des LED-Moduls 2 verändert wird.

## Patentansprüche

1. Getaktete, galvanisch-getrennte Spannungsversorgungschaltung (1) zum Betrieb eines LED-Moduls (2),
aufweisend ein galvanisches Trennelement (T), an dessen Primärseite ein durch eine erste Steuerschaltung (ST1) getakteter Schalter (S1) vorgesehen ist, und dessen Sekundärseite zu Anschlüssen für das LED-Modul (2) geführt ist,
wobei weiterhin eine potentialmässig auf der Sekundärseite des galvanischen Trennelements (T) angeordnete zweite Steuerschaltung (ST2) vorgesehen ist, die dazu ausgelegt ist, zumindest unidirektional mit der ersten Steuerschaltung (ST1) mittels eines digitalen Protokolls über einen vorzugsweise potentialgetrennten Signalübertrager (Opto), bspw. einen Optokoppler zu kommunizieren, um Betriebsparameter des LED-Moduls (2) zu der ersten Steuerschaltung (ST1) zu übermittlen,
wobei auf der Sekundärseite weiterhin vorgesehen ist eine Schaltung (3) zur Erfassung eines Überspannungszustands, wobei ein Ausgangssignal der Erfassungsschaltung (3) ebenfalls über den Signalübertrager (Opto) übertragen wird, der auch für die Übermittlung der Betriebsparameter verwendet ist, **dadurch gekennzeichnet, dass** das Ausgangssignal der Erfassungsschaltung (3) unter Umgehung der zweiten Steuerschaltung (ST2) dem Signalübertrager (Opto) zugeführt ist,
wobei für den Fall, dass das Ausgangssignal der Erfassungsschaltung (3) einen Überspannungszustand anzeigt, dieses Signal eine höhere Priorität als die Übermittlung der Betriebsparameter hat, und dass während des Anliegens des Ausgangssignals der Erfassungsschaltung (3), das einen Überspannungszustand anzeigt, keine Betriebsparameter übermittelt werden können.

2. Spannungsversorgungschaltung nach Anspruch 1,
**dadurch gekennzeichnet,**
**dass** das Ausgangssignal der Erfassungsschaltung (3) der Übermittlung der Betriebsparameter zwischen einem Ausgang der zweiten Steuerschaltung (ST2) und dem sekundärseitigen Anschluss des Signalübertragers (Opto) überlagert ist.

3. Spannungsversorgungschaltung nach einem der vorhergehenden Ansprüche,
wobei die Erfassungsschaltung (3) einen Überspannungszustand als Ausgangssignal dadurch wiedergibt, dass das Ausgangssignal das über den Signalübertrager (Opto) übertragene Signal während einer Zeitdauer in einen Zustand verbringt, der von dem digitalen Protokoll abweicht.

4. Spannungsversorgungschaltung nach Anspruch 3,
wobei die Erfassungsschaltung (3) einen Überspannungszustand als Ausgangssignal dadurch wiedergibt, dass das Ausgangssignal das über den Signalübertrager (Opto) übertragene Signal während einer Zeitdauer in einen Zustand verbringt, der länger ist als die maximal zulässige Zeitdauer eines logischen Zustands des digitalen Protokolls.

5. Spannungsversorgungschaltung nach einem der vorhergehenden Ansprüche,
wobei die erste Steuerschaltung (ST1) einen sekundärseitigen Überspannungszustand erkennt wenn das der ersten Steuerschaltung (ST1) über den Signalübertrager (Opto) zugeführte Signal in einer vorgegeben Weise von dem digitalen Protokoll abweicht und als Antwort darauf Maßnahmen zur Verringerung oder Beseitigung des Überspannungszustands ergreift, bspw. durch Veränderung der Taktung des Schalters (S1).

6. LED-Lampe, aufweisend eine Spannungsversorgung (1) nach einem der vorhergehenden Ansprüche sowie wenigstens ein angeschlossenes LED-Modul (2).

7. Verfahren zur Übermittlung von Information in einer getakteten, galvanisch-getrennten Spannungsversorgungschaltung (1) zum Betrieb eines LED-Moduls (2),
aufweisend ein galvanisches Trennelement (T), an dessen Primärseite ein durch eine erste Steuerschaltung (ST1) getakteter Schalter (S1) vorgesehen ist, und dessen Sekundärseite zu Anschlüssen für das LED-Modul (2) geführt ist, wobei:
- eine potentialmässig auf der Sekundärseite des galvanischen Trennelements (T) angeordnete zweite Steuerschaltung (ST2) zumindest unidirektional mittels eines digitalen Protokolls über einen vorzugsweise potentialgetrennten Signalübertrager (Opto), bspw. einen Optokoppler, Betriebsparameter des LED-Moduls (2) zu der ersten Steuerschaltung (ST1) übermittelt, und
- auf der Sekundärseite weiterhin eine Schaltung (3) einen Überspannungszustand erfasst,
**dadurch gekennzeichnet, dass**
- ein Ausgangssignal der Erfassungsschaltung (3) unter Umgehung der zweiten Steuerschaltung (ST2) ebenfalls über den Signalübertrager (Opto) übertragen wird, der auch für die Übermittlung der Betriebsparameter verwendet wird,
wobei für den Fall, dass das Ausgangssignal der Erfassungsschaltung (3) einen Überspannungszustand anzeigt, dieses Signal eine höhere Priorität als die Übermittlung der Betriebsparameter hat, und dass während des Anliegens des Ausgangssignals der Erfassungsschaltung (3), das einen Überspannungszustand anzeigt, keine Betriebsparameter übermittelt werden

8. Verfahren nach Anspruch 7,
wobei das Ausgangssignal der Erfassungsschaltung (3) der Übermittlung der Betriebsparameter zwischen einem Aushang der zweiten Steuerschaltung (ST2) und dem sekundärseitigen Anschluss des Signalübertragers (Opto) überlagert wird.

9. Verfahren nach einem der vorhergehenden Ansprüche 7 oder 8,
wobei die Erfassungsschaltung (3) einen Überspannungszustand als Ausgangssignal dadurch wiedergibt, dass das Ausgangssignal das über den Signalübertrager (Opto) übertragene Signal während einer Zeitdauer in einen Zustand verbringt, der von dem digitalen Protokoll abweicht.

10. Verfahren nach Anspruch 9,
wobei die Erfassungsschaltung (3) einen Überspannungszustand als Ausgangssignal dadurch wiedergibt, dass das Ausgangssignal das über den Signalübertrager (Opto) übertragene Signal während einer Zeitdauer in einen Zustand verbringt, der länger ist als die maximal zulässige Zeitdauer eines logischen Zustands des digitalen Protokolls.

11. Verfahren nach einem der Ansprüche 7 bis 10, wobei die erste Steuerschaltung einen sekundärseitigen Überspannungszustand erkennt wenn das der ersten Steuerschaltung (ST1) über den Signalübertrager (Opto) zugeführte Signal in einer vorgegeben Weise von dem digitalen Protokoll abweicht und als Antwort darauf Massnahmen zur Verringerung oder Beseitigung des Überspannungszustands ergreift, bspw. durch Veränderung der Taktung des Schalters (S1) .

## Claims

1. A clocked, galvanically-separated voltage supply circuit (1) for operating an LED module (2), having a galvanic separating element (T), on the primary side of which a switch (S1) clocked by a first control circuit (ST1) is provided, and the secondary side of which is guided to terminals for the LED module (2), wherein furthermore a second control circuit (ST2) is provided arranged in terms of potential on the secondary side of the galvanic separating element (T), which is designed to communicate at least unidirectionally with the first control circuit (ST1) by means of a digital protocol via a preferably potential-separated signal transmitter (Opto), for example, an optocoupler, in order to transmit operating parameters of the LED module (2) to the first control circuit (ST1), wherein furthermore on the secondary side a circuit (3) is provided for detecting an overvoltage state, wherein an output signal from the detection circuit (3) is likewise transmitted via the signal transmitter (Opto), which is also used for transmitting the operating parameters, **characterized in that** the output signal of the detection circuit (3) bypassing the second control circuit (ST2) is supplied to the signal transmitter (Opto), wherein in the event that the output signal of the detection circuit (3) displays an overvoltage state, this signal has a higher priority than the transmission of the operating parameter, and that during the presence of the output signal of the detection circuit (3), which displays an overvoltage state, no operating parameters can be transmitted.

2. A voltage supply circuit according to Claim 1,
**characterized in**
**that** the output signal of the detection circuit (3) is superimposed on the transmission of the operating parameters between an output of the second control circuit (ST2) and the secondary-side terminal of the signal transmitter (Opto).

3. A voltage supply circuit according to any one of the preceding claims, wherein the detection circuit (3) reflects an overvoltage state as output signal in that the output signal brings the signal transmitted via the signal transmitter (Opto) during a period of time into a state, which deviates from the digital protocol.

4. A voltage supply circuit according to Claim 3,
wherein the detection circuit (3) reflects an overvoltage state as output signal in that the output signal brings the signal transmitted via the signal transmitter (Opto) during a period of time into a state, which is longer than the maximum permissible period of time of a logical state of the digital protocol.

5. A voltage supply circuit according to any one of the preceding claims,
wherein the first control circuit (ST1) recognizes a secondary-side overvoltage state, if the signal supplied to the first control circuit (ST1) via the signal transmitter (Opto) in a predetermined manner deviates from the digital protocol and as response thereto takes measures to reduce or to eliminate the overvoltage state, for example, by changing the clocking of the switch (S1).

6. An LED lamp, having a voltage supply (1) according to any one of the preceding claims as well as at least one connected LED module (2).

7. A method for the transmission of information in a clocked, galvanically-separated voltage supply circuit (1) for the operation of an LED module (2),
having a galvanic separating element (T), on the primary side of which a switch (S1) clocked by a first control circuit (ST1) is provided, and the secondary side of which is guided to terminals for the LED module (2), wherein:
- a second control circuit (ST2) arranged in terms of potential on the secondary side of the galvanic separating element (T) transmits at least unidirectionally by means of a digital protocol via a preferably potential-separated signal transmitter (Opto), for example, an optocoupler, operating parameters of the LED module (2) to the first control circuit (ST1), and
- on the secondary side, furthermore, a circuit (3) detects an overvoltage state, **characterized in that**
- an output signal of the detection circuit (3) bypassing the second control circuit (ST2) is likewise transmitted via the signal transmitter (Opto), which is also used for transmitting the operating parameters,
wherein in the event that the output signal of the detection circuit (3) displays an overvoltage state, this signal has a higher priority than the transmission of the operating parameters, and
that during the presence of the output signal of the detection circuit (3), which displays an overvoltage state, no operating parameters are transmitted.

8. A method according to Claim 7,
wherein the output signal of the detection circuit (3) is superimposed on the transmission of the operating parameters between an output of the second control circuit (ST2) and the secondary-side terminal of the signal transmitter (Opto).

9. A method according to any one of the preceding Claims 7 or 8,
wherein the detection circuit (3) reflects an overvoltage state as output signal in that the output signal brings the signal transmitted via the signal transmitter (Opto) during a period of time into a state, which deviated from the digital protocol.

10. A method according to Claim 9,
wherein the detection circuit (3) reflects an overvoltage state as output signal in that the output signal brings the signal transmitted via the signal transmitter (Opto) during a period of time into a state, which is longer than the maximum permissible period of time of a logical state of the digital protocol.

11. A method according to any one of Claims 7 to 10,
wherein the first control (ST1) recognizes a secondary-side overvoltage state, if the signal supplied to the first control circuit (ST1) via the signal transmitter (Opto) in a predetermined manner deviates from the digital protocol and as response thereto takes measures to reduce or to eliminate the overvoltage state, for example, by changing the clocking of the switch (S1).

## Revendications

1. Circuit d'alimentation en tension (1) cadencé à séparation galvanique, pour la commande d'un module à LED (2),
comprenant un élément de séparation galvanique (T), au niveau du côté primaire duquel est prévu un commutateur (S1) cadencé par un premier circuit de commande (ST1) et dont le côté secondaire est guidé vers des raccords pour le module LED (2), un deuxième circuit de commande (ST2) étant prévu, du point de vue du potentiel, sur le côté secondaire de l'élément de séparation galvanique (T), qui est conçu pour communiquer de manière au moins unidirectionnelle avec le premier circuit de commande (ST1) au moyen d'un protocole numérique par l'intermédiaire d'un transmetteur de signaux (Opto) de préférence à séparation de potentiel, par exemple un optocoupleur, afin de transmettre les paramètres de fonctionnement du module LED (2) au premier circuit de commande (ST1), un circuit (3) pour la mesure d'un état de surtension étant en outre prévu sur le côté secondaire, un signal de sortie du circuit de mesure (3) étant également transmis par l'intermédiaire du transmetteur de signaux (Opto), qui est également utilisé pour la transmission des paramètres de fonctionnement, **caractérisé en ce que** le signal de sortie du circuit de mesure (3) est appliqué au transmetteur de signaux (Opto) en contournant le deuxième circuit de commande (ST2),
moyennant quoi, dans le cas où le signal de sortie du circuit de mesure (3) montre un état de surtension, ce signal présente une priorité supérieure à la transmission des paramètres de fonctionnement et, pendant l'application au circuit de mesure (3) du signal de sortie qui montre un état de surtension, aucun paramètre de fonctionnement ne peut être transmis.

2. Circuit d'alimentation en tension selon la revendication 1,
**caractérisé en ce que**
le signal de sortie du circuit de mesure (3) est superposé à la transmission des paramètres de fonctionnement entre une sortie du deuxième circuit de commande (ST2) et le raccord côté secondaire du transmetteur de signaux (Opto).

3. Circuit d'alimentation selon l'une des revendications précédentes,
le circuit de mesure (3) reproduisant un état de surtension sous la forme d'un signal de sortie grâce au fait que le signal de sortie amène le signal transmis par l'intermédiaire du transmetteur de signaux (Opto) pendant une période dans un état qui diffère du protocole numérique.

4. Circuit d'alimentation en tension selon la revendication 3,
le circuit de mesure (3) reproduisant un état de surtension sous la forme d'un signal de sortie grâce au fait que le signal de sortie amène le signal transmis par l'intermédiaire du transmetteur de signaux (Opto) dans un état pendant une période qui est plus longue que la durée maximale admissible d'un état logique du protocole numérique.

5. Circuit d'alimentation selon l'une des revendications précédentes,
le premier circuit de commande (ST1) détectant un état de surtension côté secondaire lorsque le signal appliqué au premier circuit de commande (ST1) par l'intermédiaire du transmetteur de signaux (Opto) diffère du protocole numérique d'une manière prédéterminée et prenant, en réponse à celui-ci, des mesures pour réduire ou éliminer l'état de surtension, par exemple en modifiant le cadencement du commutateur (S1).

6. Lampe à LED comprenant une alimentation en tension (1) selon l'une des revendications précédentes ainsi qu'au moins un module LED (2) raccordé.

7. Procédé de transmission d'informations dans un circuit d'alimentation en tension (1) cadencé à séparation galvanique pour la commande d'un module LED (2),
comprenant un élément de séparation galvanique (T), au niveau du côté primaire duquel est prévu un commutateur (S1) cadencé par un premier circuit de commande (ST1) et dont le côté secondaire est guidé vers des raccords pour le module LED (2),
- un deuxième circuit de commande (ST2) disposé, du point de vue du potentiel, sur le côté secondaire de l'élément de séparation galvanique (T) transmettant au premier circuit de commande (ST1), de manière au moins unidirectionnelle, au moyen d'un protocole numérique, par l'intermédiaire d'un transmetteur de signaux (Opto) de préférence à séparation de potentiel, par exemple un optocoupleur, les paramètres de fonctionnement du module LED (2) et
- un circuit (3) mesurant en outre, sur le côté secondaire, un état de surtension, **caractérisé en ce que**
- un signal de sortie du circuit de mesure (3) est transmis en contournant le deuxième circuit de commande (ST2) également par l'intermédiaire du transmetteur de signaux (Opto), qui est utilisé également pour la transmission des paramètres de fonctionnement,
moyennant quoi, dans le cas où le signal de sortie du circuit de mesure (3) montre un état de surtension, ce signal présente une priorité supérieure à la transmission des paramètres de fonctionnement et, pendant l'application au circuit de mesure (3) du signal de sortie qui montre un état de surtension, aucun paramètre de fonctionnement ne peut être transmis.

8. Procédé selon la revendication 7,
le signal de sortie du circuit de mesure (3) étant superposé à la transmission des paramètres de fonctionnement entre une sortie du deuxième circuit de commande (ST2) et le raccord côté secondaire du transmetteur de signaux (Opto).

9. Procédé selon l'une des revendications 7 ou 8,
le circuit de mesure (3) reproduisant un état de surtension sous la forme d'un signal de sortie grâce au fait que le signal de sortie amène le signal transmis par l'intermédiaire du transmetteur de signaux (Opto) pendant une période dans un état qui diffère du protocole numérique.

10. Procédé selon la revendication 9,
le circuit de mesure (3) reproduisant un état de surtension sous la forme d'un signal de sortie grâce au fait que le signal de sortie amène le signal transmis par l'intermédiaire du transmetteur de signaux (Opto) dans un état pendant une période qui est plus longue que la durée maximale admissible d'un état logique du protocole numérique.

11. Procédé selon l'une des revendications 7 à 10,
le premier circuit de commande (ST1) détectant un état de surtension côté secondaire lorsque le signal appliqué au premier circuit de commande (ST1) par l'intermédiaire du transmetteur de signaux (Opto) diffère du protocole numérique d'une manière prédéterminée et prenant, en réponse à celui-ci, des mesures pour réduire ou éliminer l'état de surtension, par exemple en modifiant le cadencement du commutateur (S1).
